# FASCICULE DE BREVET EUROPEEN

(11) **EP 3 201 031 B1**
(45) Date de publication et mention de la délivrance du brevet: **29.04.2020**
(21) Numéro de dépôt: 15788135.0
(22) Date de dépôt: 02.10.2015
(51) Int. Cl.: B60K 17/10, B60K 17/356, F16H 61/431, F16H 61/472

(54) **PROCEDE D'ASSISTANCE HYDRAULIQUE DE L'ENTRAINEMENT D'UN VEHICULE A BASSE VITESSE**
VERFAHREN ZUR HYDRAULISCHEN UNTERSTÜTZUNG DES ANTRIEBS EINES FAHRZEUGS MIT GERINGER DREHZAHL
METHOD FOR HYDRAULICALLY ASSISTING THE DRIVE OF A LOW-SPEED VEHICLE

(30) Priorité: 03.10.2014 FR 1459501
(43) Date de publication de la demande: 09.08.2017
(73) Titulaire: Poclain Hydraulics Industrie, 60410 Verberie (FR)
(72) Inventeur: DIDIERJEAN, Claude, F-60410 Verberie (FR); DEPIERRE, Gery, F-60410 Verberie (FR); HOUILLON, Pierre-Louis, F-60410 Verberie (FR)
(74) Mandataire: Cabinet Beau de Loménie
(86) Numéro de dépôt international: PCT/FR2015/052647
(87) Numéro de publication internationale: WO 2016/051108

(56) Documents cités:
- US-A- 3 374 847
- US-A1- 2007 101 709

## Description

La présente invention concerne un procédé de commande d'un dispositif de transmission d'un véhicule, le dispositif comprenant un moteur d'entrainement, une transmission mécanique reliée au moteur d'entrainement et une transmission hydraulique ayant une pompe et n moteurs hydrauliques, n étant supérieur ou égal à 1, la pompe étant apte à être entraînée par le moteur d'entrainement pour alimenter les moteurs hydrauliques en fluide.

On connaît, par exemple par le brevet européen EP 0 993 982, l'utilisation combinée d'une transmission hydraulique et d'une transmission mécanique. La transmission hydraulique est utilisée quand le besoin s'en fait sentir, en particulier pour réaliser une assistance de la transmission mécanique dans des conditions de circulation qui le nécessitent, par exemple en cas de perte d'adhérence d'au moins l'une des roues du véhicule lorsqu'il circule sur un terrain glissant tel que celui d'un chantier de construction. Ainsi, dans ces conditions dites « normales » d'utilisation de l'assistance hydraulique, le débit de la pompe est déterminé pour entraîner les roues liées aux moteurs hydrauliques à la même vitesse que les roues liées à la transmission mécanique. La commande de la pompe dépend donc de l'information obtenue sur la vitesse du véhicule.

Dans certains cas, l'assistance doit être réalisée à basse vitesse, par exemple dans une situation de démarrage du véhicule après un arrêt. Or, dans ces situations, l'information obtenue sur la vitesse du véhicule peut manquer de fiabilité, car la vitesse est alors trop lente pour être déterminée avec précision. En conséquence, le contrôle de l'assistance hydraulique par la vitesse du véhicule peut ne pas être totalement efficace. Les données calculées nécessaires peuvent être momentanément aberrantes, variables, ou erratiques. Il en résulte des risques d'écart entre les vitesses des roues entraînée par la transmission hydraulique et celles des roues entraînées par la transmission mécanique, qui nuisent à la bonne motricité du véhicule. En particulier, il peut se produire des à-coups, une poussée trop faible, ou une poussée trop forte sur les roues entraînées par la transmission hydraulique.

La présente invention vise à résoudre cette difficulté, en proposant un procédé de commande de la transmission hydraulique qui, même à basse vitesse, assure une assistance hydraulique efficace.

Ce but est atteint grâce au fait qu'on réalise une phase d'assistance dite « à basse vitesse » pendant laquelle, alors que le véhicule est entraîné par la transmission mécanique, on établit une consigne de pression pour la différence de pression entre l'alimentation et l'échappement des moteurs hydrauliques, on alimente les moteurs hydrauliques par la pompe, on détecte la différence de pression entre l'alimentation et l'échappement des moteurs hydrauliques, et on ajuste le débit de la pompe pour que ladite différence de pression soit sensiblement égale à ladite consigne de pression.

Ainsi, c'est sur la base de la consigne de pression que l'on ajuste le débit de la pompe, sans s'intéresser nécessairement à la vitesse réelle du véhicule. Les roues attelées à la transmission hydraulique sont entraînées de manière fiable, à une vitesse maîtrisée qui dépend de cette consigne de pression. La phase d'assistance hydraulique est effective et efficace, car le débit de la pompe est ajusté pour obtenir la différence de pression souhaitée, permettant ainsi que la transmission hydraulique fournisse un couple hydraulique significatif, permettant une maîtrise de la vitesse des roues attelées à la transmission hydraulique et, le cas échéant, une montée en vitesse maîtrisée. La consigne de pression est déterminée pour, en fonction du couple total demandé, permettre un couple hydraulique de consigne, correspondant aux besoins de complément du couple d'entraînement.

Comme on le verra dans la suite, on peut faire cesser la phase d'assistance à basse vitesse dans différentes conditions, par exemple lorsqu'un paramètre représentatif de la vitesse du véhicule atteint un seuil déterminé, et continuer l'assistance hydraulique de manière classique, en prenant en compte la vitesse du véhicule, ou bien cesser l'assistance hydraulique.

Optionnellement, on détecte une situation de démarrage de l'entrainement du véhicule par la transmission mécanique et on réalise la phase d'assistance à basse vitesse en tant qu'aide au démarrage.

Il est particulièrement intéressant d'utiliser l'assistance hydraulique en tant qu'aide au démarrage après un arrêt. En effet, en particulier lorsque le véhicule est un poids-lourd ou un engin de chantier, son démarrage nécessite un couple d'entraînement très important, qui sollicite fortement la transmission mécanique et est gourmand en énergie. De plus, la montée en vitesse peut être lente. Le couple disponible pour le démarrage du véhicule est la combinaison du couple d'entraînement développé par la transmission mécanique et du couple hydraulique développé par la transmission hydraulique. L'assistance hydraulique permet une montée en vitesse plus rapide du véhicule et une sollicitation moindre de la transmission mécanique, laquelle se traduit par une consommation moindre d'énergie. La consigne de pression permet de commander la transmission hydraulique de manière fiable, malgré le fait que, lors du démarrage, la vitesse du véhicule est très faible.

Optionnellement, lorsqu'on détecte la situation de démarrage, l'aide au démarrage est reste inactivée tant que l'amplitude d'actionnement de la commande d'accélération du véhicule n'a pas atteint une amplitude cible.

Ceci permet d'éviter qu'une sollicitation de la commande d'accélération préalable au démarrage ne soit à tort interprétée comme un besoin d'aide au démarrage. En d'autres termes, ceci évite que, alors que le conducteur est en train de préparer le démarrage, sans l'avoir encore sollicité, la transmission hydraulique ne procure une traction parasite non souhaitée. Par exemple, l'amplitude cible est de l'ordre de 5% de la course totale de la commande d'accélération. Optionnellement, on cesse la phase d'assistance à basse vitesse, en particulier l'aide au démarrage, quand au moins l'un des événements suivants se produit :
- un paramètre représentatif de la vitesse du véhicule atteint une valeur prédéterminée (ce paramètre pouvant être par exemple la vitesse du véhicule ou encore la vitesse des roues entraînées par les moteurs hydrauliques ou celle de ces moteurs),
- la durée de la phase d'assistance à basse vitesse atteint une durée prédéterminée,
- le couple de sortie requis pour la transmission mécanique diminue jusqu'à une valeur prédéterminée,
- un embrayage reliant la transmission mécanique au moteur d'entraînement est relâché depuis une durée prédéterminée, qui peut être égale à 0, après avoir été actionné.

La phase d'assistance à basse vitesse est provisoire. Pour la faire cesser, on peut par exemple isoler de la pompe les conduites d'alimentation et d'échappement des moteurs hydrauliques, ou bien placer la pompe dans sa configuration de cylindrée nulle, ou bien encore, comme on le verra dans la suite, faire en sorte que les moteurs hydrauliques délivrent un couple nul. Les paramètres précités sont simples à mettre en œuvre, et sont bien révélateurs de ce que le véhicule commence à circuler dans des conditions normales, c'est-à-dire que le couple demandé peut être fourni par la seule transmission mécanique. Par exemple, la vitesse du véhicule à partir de laquelle on fait cesser la phase d'assistance à basse vitesse peut être de l'ordre de 5 km/h, voire 2 km/h. La durée prédéterminée peut être de l'ordre de 1 mn, voire 30s, voire 10 s. Lorsque le paramètre utilisé est le couple de sortie requis, la valeur prédéterminée peut être une valeur absolue, par exemple 4000 N.m, ou, plutôt un pourcentage du couple maximal nominal de la transmission mécanique, par exemple 20 %.

Optionnellement, on fait varier la valeur de la consigne de pression pendant la phase d'assistance à basse vitesse.

En particulier, cette variation s'opère dans le sens d'une diminution au fil du temps, cette diminution pouvant être progressive (par exemple linéaire), éventuellement après un palier initial pendant lequel la consigne de pression est maintenue constante, juste au début de la phase d'assistance à basse vitesse. Cette variation de la consigne de pression permet, d'une part, d'éviter que la vitesse d'entrainement des roues ne soit inadaptée à la vitesse instantanée réelle du véhicule et d'éviter en particulier les à-coups de couple négatif. D'autre part, elle permet de faire cesser progressivement l'assistance hydraulique, sans à-coup et sans baisse brutale du couple total.

Optionnellement, pendant la phase d'assistance à basse vitesse, on fait diminuer la valeur de la consigne de pression entre une valeur maximale CPmax et une valeur minimale CPmin, ladite valeur minimale CPmin étant atteinte à la fin de la phase d'assistance à basse vitesse.

Optionnellement, on définit un plafond de consigne de pression Pmax et on détermine la valeur maximale de la consigne de pression CPmax, selon la relation CPmax = f x Pmax, le coefficient f étant inférieur ou égal à 1 et étant fonction de caractéristiques de l'assistance à basse vitesse demandées, telles que l'amplitude d'actionnement de la commande d'accélération du véhicule.

Ainsi, la variation de la consigne de pression peut être directement liée à la sollicitation d'accélération faite par le conducteur du véhicule. A mesure que la vitesse du véhicule se rapproche de la vitesse souhaitée par le conducteur pour le premier rapport de vitesse, celui-ci tend à relâcher la commande d'accélération ce qui, en fait, traduit une diminution du besoin de couple. Le couple hydraulique d'assistance diminue ainsi de manière naturelle, en suivant la diminution du besoin en couple révélée par la diminution de l'amplitude d'actionnement de la commande d'accélération. En quelque sorte, l'agressivité de la traction opérée par la transmission hydraulique dépend ainsi de l'amplitude de la commande d'accélération, alors que l'agressivité de la traction opérée par la transmission mécanique peut dépendre du degré de relâchement de commande d'embrayage.

Optionnellement, le coefficient f est égal à 1 lorsque l'amplitude d'actionnement de la commande d'accélération est au moins égale à un pourcentage prédéterminé de la course totale de ladite commande, ledit pourcentage prédéterminé étant en particulier compris entre 20% et 40%, plus particulièrement 30%.

De ce fait, on fournit le couple hydraulique d'assistance maximal tant que l'amplitude d'actionnement significative de la commande d'accélération traduit un fort besoin en couple, en particulier pour une montée en vitesse ou pour le démarrage.

Optionnellement, on maintient la valeur de la consigne de pression à la valeur maximale CPmax depuis le début de la phase d'assistance à basse vitesse, jusqu'au moment où l'entrainement du véhicule atteint un régime intermédiaire déterminé, puis on fait diminuer la valeur de la consigne de pression jusqu'à la valeur minimale CPmin atteinte à la fin de la phase d'assistance à basse vitesse.

Le fait que ce régime intermédiaire soit atteint révèle le fait que le véhicule a commencé à se mettre en mouvement d'une manière suffisamment nette et pérenne pour que le besoin en couple hydraulique d'assistance commence à diminuer.

Optionnellement, on fait diminuer la valeur de la consigne de pression selon une loi de variation déterminée, en particulier une loi de variation linéaire.

Optionnellement, le régime intermédiaire est atteint lorsqu'un paramètre représentatif de la vitesse du véhicule atteint une valeur intermédiaire déterminée.

Par exemple, la vitesse cible intermédiaire est de l'ordre de 2 km/h.

Optionnellement, on permet ou non l'activation de l'assistance à basse vitesse.

Optionnellement, pendant la phase d'assistance à basse vitesse, on ajuste le débit de la pompe en faisant varier la cylindrée de ladite pompe.

C'est une façon simple et fiable de faire varier le débit de la pompe. Un autre possibilité est de faire varier la vitesse du moteur d'entraînement, mais cela est délicat à basse vitesse, en particulier lors du démarrage du véhicule alors que ce moteur est fortement sollicité pour ce démarrage. Une autre possibilité, lorsque la pompe est liée au moteur d'entraînement par une interface permettant de faire varier le ratio d'entraînement de la pompe par ce moteur, est de faire varier ledit ratio.

Optionnellement, on commute entre une phase d'assistance à basse vitesse et une phase d'assistance hydraulique dans laquelle le débit de la pompe est déterminé en fonction de la vitesse de sortie de la transmission mécanique.

Les n moteurs hydrauliques de la transmission hydraulique sont en particulier des moteurs à pistons radiaux. Ainsi, le ou chaque moteur hydraulique peut comprendre :
- un carter avec une came ondulée multilobes,
- un bloc-cylindres, monté rotatif par rapport à la came autour d'un axe du moteur et ayant des cylindres radiaux dans lesquels coulissent les pistons radiaux, et
- un distributeur interne de fluide, fixe en rotation par rapport à la came et ayant des conduits de distribution aptes à être reliés à une alimentation en fluide et à un échappement de fluide pour, lorsque le moteur est actif, alternativement relier les cylindres à l'alimentation et à l'échappement.

En particulier, le distributeur présente une face radiale de distribution, dans laquelle débouchent les conduits de distribution et maintenue en appui contre une face radiale de communication du bloc-cylindres dans laquelle débouchent les conduits de cylindres.

Le ou chaque moteur hydraulique peut être désactivé par un décrabottage de ses pistons, c'est-à-dire, en faisant rentrer les pistons dans leurs cylindres pour qu'ils cessent d'être en contact avec la came. Ce décrabottage peut être opéré en faisant régner une pression de décrabottage dans l'espace intérieur du carter et, éventuellement, à l'aide de ressorts de rappel associés aux pistons. Lorsque les pistons sont décrabottés, les conduits de distribution peuvent être mis à la même pression, en particulier une faible pression de gavage.

En particulier, on prévoit un moteur hydraulique pour chacune des roues pouvant être entrainées par la transmission hydraulique, le rotor d'un moteur prévu pour entraîner une roue étant directement attelé à la roue pour l'entrainer à sa vitesse de sortie.

En particulier, on prévoit un moteur hydraulique pour chacune des roues pouvant être entrainées par la transmission hydraulique, et ces moteurs sont de type à came tournante, leur carter pouvant alors constituer une partie des moyeux des roues auxquelles ils sont attelés.

Ainsi, en particulier en fonction du niveau de vitesse du véhicule, on passe de l'un à l'autre mode d'assistance.

L'invention sera bien comprise et ses avantages apparaîtront mieux à la lecture de la description détaillée qui suit, d'un mode de réalisation illustré à titre d'exemple non limitatif. La description se réfère aux dessins annexés sur lesquels :
- la figure 1 est une vue schématique d'un dispositif de transmission d'un véhicule permettant la mise en œuvre du procédé selon l'invention ; et
- les figures 2A et 2B sont des courbes illustrant des exemples de lois de variation de la consigne de pression.

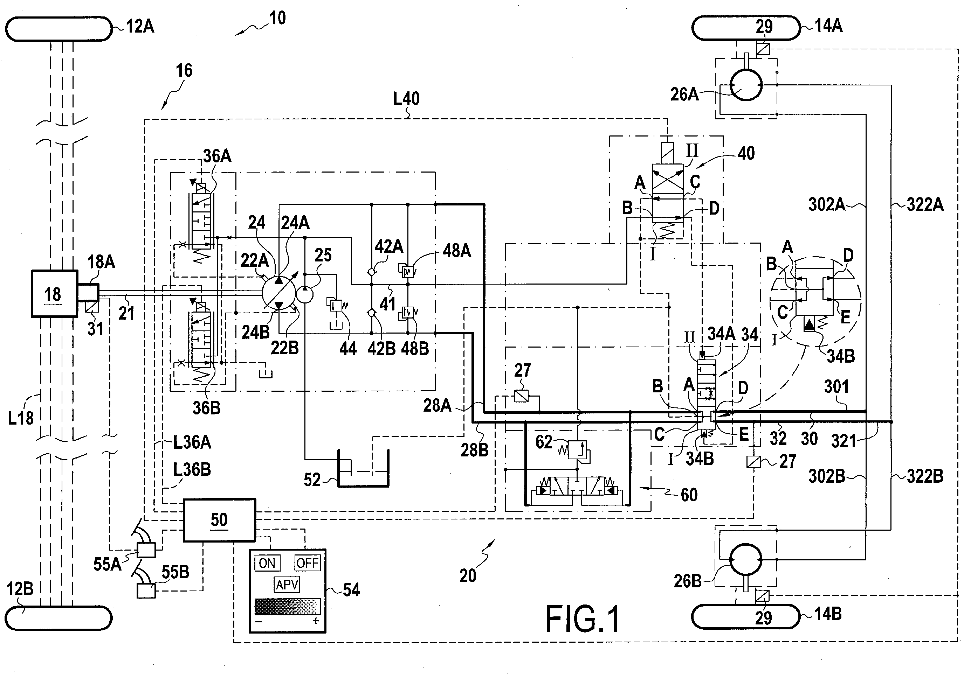

La figure 1 représente un dispositif de transmission d'un véhicule 10 ayant deux roues arrière 12A, 12B, et deux roues avant 14A, 14B. L'entraînement du véhicule est assuré en régime normal par une transmission mécanique 16, qui est la transmission principale. Cette transmission mécanique relie un moteur d'entraînement 18 aux roues 12A et 12B (par exemple les roues arrière), et assure ainsi seule l'entraînement du véhicule la plupart du temps.

Le moteur 18 est relié à la transmission mécanique 16 par un embrayage 18A. Il peut être un moteur à combustion interne (à essence, GPL, ou autres...), ou bien un autre type de moteur, tel qu'un moteur électrique ou autre.

Outre la transmission mécanique, le dispositif de transmission comprend une transmission hydraulique 20 qui est activée à titre d'assistance, pour assurer la propulsion du véhicule dans des conditions de route difficiles (route en pente ou déclive, route glissante, etc.) ou, conformément à l'invention, à basse vitesse, en particulier pour l'aide au démarrage du véhicule. Cette transmission hydraulique permet en effet de rendre motrices les deux roues 14A et 14B, qui ne sont pas entraînées par la transmission mécanique. Ainsi grâce à la transmission hydraulique 20, le véhicule dispose de modes de fonctionnement dans lesquels les quatre roues 12A, 12B, 14A et 14B sont motrices.

Bien que dans ce mode de réalisation, l'assistance hydraulique soit appliquée aux roues avant 14A et 14B, elle pourrait tout aussi bien être appliquée à des roues arrière.

La transmission hydraulique 20 est couplée à un arbre 21 qui est lié à la sortie de puissance du moteur 18, duquel elle tire l'énergie qu'elle transmet aux roues 14A, 14B lorsqu'elle est activée.

Plus précisément, la transmission hydraulique comprend une pompe 24 qui est reliée à l'arbre de sortie 21 du moteur d'entraînement 18 de manière à être entraînée par ce dernier. Cette pompe 24, également dénommée ci-après « pompe principale », sert à l'alimentation des moteurs hydrauliques 26A et 26B qui sont respectivement attelés aux roues 14A et 14B.

La pompe principale 24 est de type à cylindrée variable, en particulier une pompe réversible à débit variable, du type à plateau-came oscillant, dont l'orientation fait varier la cylindrée de la pompe.

Dans l'exemple représenté, la transmission hydraulique comprend également une pompe auxiliaire 25 ou pompe de gavage qui, de manière connue en soi, sert à maintenir une pression minimale de gavage dans les composants du circuit de manière à éviter les phénomènes de cavitation. La pompe 25 a une cylindrée fixe, sa pression de refoulement étant limitée par le limiteur de pression 44 de manière à maintenir la pression de gavage P_{G}, par exemple de l'ordre de 30 bar, dans une conduite de gavage 41.

Les pompes principale 24 et auxiliaire 25 sont reliées toutes les deux à l'arbre de sortie 21 du moteur 18, et sont donc actionnées conjointement par celui-ci. Optionnellement, les pompes principale et auxiliaire peuvent également être entraînées par deux arbres séparés, ou le gavage auxiliaire peut être assuré par un groupe électropompe.

Le circuit de transmission hydraulique comprend deux conduites de pompe 28A, 28B, reliées aux orifices principaux 24A, 24B de la pompe 24. Selon le sens de fonctionnement de la pompe 24, ces conduites de pompe assurent respectivement l'alimentation en fluide des moteurs hydrauliques et l'échappement, ou inversement.

En effet, via une valve d'activation 34, ces conduites de pompe 28A, 28B peuvent être mises en communication respectivement avec deux conduites de moteur 30, 32. Chacune de ces conduites de moteur a une première partie 301, 321 apte à être reliée à une conduite de pompe, et une deuxième partie dans laquelle elles se divisent chacune en deux branches 302A, 302B, et 322A, 322B respectivement, reliées à des enceintes d'alimentation et d'échappement des moteurs 26A et 26B.

La pression dans celle des conduites de pompe 28A, 28B dont la pression est la plus faible est limitée par une valve d'échange 60 associée à un limiteur de pression 62 relié à un réservoir sans surpression (à la pression atmosphérique) 52, de manière à maintenir, dans la conduite de pompe à la plus basse pression, une pression égale à la pression de tarage du limiteur de pression 62, par exemple de l'ordre de 22 bar.

On notera que dans la transmission hydraulique 20, la valve d'échange 60 est optionnelle.

De manière connue en soi, les moteurs 26A, 26B sont en particulier des moteurs hydrauliques à pistons radiaux, similaires aux moteurs décrits par exemple dans le brevet français n°2 504 987.

Ces moteurs peuvent être engagés ou désengagés (embrayés ou débrayés), en particulier en faisant varier la pression régnant dans leurs carters, par exemple comme indiqué dans le brevet européen n° 0 993 982.

Cependant, d'autres types de moteurs hydrauliques, par exemple des moteurs à pistons axiaux, pourraient être prévus.

Chacun des moteurs 26A, 26B comporte un arbre de sortie, relié respectivement aux roues 14A, 14B. En mode moteur de la transmission hydraulique 20, sous l'effet de la différence de pression imposée par la pompe principale entre les conduites de pompe, et donc entre les conduites de moteur, les moteurs 26A et 26B délivrent un couple moteur qui leur permet d'entraîner les roues 14A, 14B.

Dans le cas où la différence de pression imposée par la pompe principale s'inverse entre les conduites de pompe, et donc entre les conduites de moteur (la pression à l'orifice de refoulement de la pompe 24A étant alors inférieure à la pression à son orifice d'alimentation 24B), la transmission hydraulique 20 est inversement en mode de freinage, et les moteurs 26A et 26B délivrent un couple de freinage qui tend à freiner les roues 14A, 14B.

La fonction générale de la valve d'activation 34 est d'activer ou de désactiver la transmission hydraulique 20 :
- en mode désactivé, seule la transmission mécanique sert à l'entraînement du véhicule ; et
- en mode activé, la transmission mécanique et la transmission hydraulique peuvent entraîner conjointement le véhicule. Cependant dans ce mode, la transmission hydraulique 20 peut par moments être inactive (ou débrayée) et les moteurs ne délivrer aucun couple, à savoir lorsque le dispositif est opéré dans un mode sans couple qui sera décrit dans la suite. Par ailleurs, on peut envisager un mode de fonctionnement, dans lequel la transmission hydraulique est activée seulement pendant le passage de vitesses, alors que la transmission mécanique est momentanément débrayée. Cependant, l'invention s'intéresse plus particulièrement au mode activé lorsque le véhicule circule à basse vitesse, par exemple une vitesse inférieure à 5km/h.

La valve 34 présente trois voies amont A, B, C, deux voies aval D et E, et deux positions I et II. Une position intermédiaire occupée de manière seulement transitoire est également représentée sur la figure 1.

La valve d'activation 34 comporte en outre deux chambres de commande hydraulique 34A, 34B.

Dans ce texte, les termes 'amont' et 'aval' appliqués aux voies d'une valve désignent en général le sens le plus fréquent de circulation du fluide ou de transmission d'une commande, sans que cela n'exclue d'autres modes de fonctionnement.

Les voies A et C sont reliées respectivement aux conduites de pompe 28A et 28B. La voie B est reliée au réservoir 52.

Les voies D et E sont reliées respectivement aux premières parties 301 et 321 des conduites de moteur 30 et 32, et ainsi sont reliées respectivement aux orifices d'alimentation et d'échappement des moteurs 26A et 26B.

Les chambres de commande 34A et 34B sont reliées respectivement aux voies C et D d'une valve de commande 40, en l'espèce une électrovalve, qui va être décrite plus loin.

La valve d'activation 34 comporte en outre un ressort de rappel qui tend à la maintenir dans la première position I.

Dans la première position I, les voies B, D et E sont reliées, et les voies A et C sont reliées. Dans la deuxième position II, les voies A et D sont reliées, les voies C et E sont reliées, et la voie B est isolée.

Comme le montre la case intermédiaire représentée sur la figure 1 pour la valve 34, en position intermédiaire entre les positions I et II, les quatre voies A, C, D et E sont reliées via des restrictions, la voie B étant au contraire isolée.

Ainsi, en première position I de la valve 34, les conduites de pompe 28A, 28B sont reliés l'une à l'autre (position de bipasse). De plus, les conduites de moteur 30 et 32 sont reliées l'une à l'autre, tout en étant reliées au réservoir 52. Les moteurs 26A et 26B sont donc inactifs. Ils peuvent alors être débrayés, c'est-à-dire mis en situation de roue libre, de différentes manières.

Par exemple, les pistons des moteurs hydrauliques peuvent être rétractés dans leurs cylindres, comme décrit dans le brevet européen n° 0 993 982. On peut également envisager de désengager les rotors des moteurs par rapport à leurs organes de sortie. Par exemple, l'engagement entre les rotors et les organes de sortie s'opère par des crabots ou par friction, et le désengagement consiste à faire cesser la coopération des crabots ou à diminuer la friction.

En deuxième position II de la valve 34, les conduites de moteurs sont reliées aux conduites de pompe et alimentent les moteurs 26A, 26B pour qu'ils entraînent les roues 14A, 14B. Cette position correspond à l'état activé de la transmission hydraulique 20.

L'alimentation en fluide de cette transmission 20 se fait de la manière suivante.

Lorsque la pompe principale 24 est entraînée par le moteur d'entraînement 18, le fluide circule dans les conduites de pompes 28A et 28B, dans le sens de l'alimentation à partir de la pompe pour l'une et dans le sens du refoulement vers la pompe pour l'autre.

Les conduites de pompe 28A, 28B sont reliées à la conduite de gavage 41 via des clapets anti-retour 42A, 42B pour que la pression dans ces conduites reste au moins égale à la pression de gavage P_{G}, et via des limiteurs de pression 48A, 48B pour éviter toute surpression.

L'électrovalve de commande 40 permet de placer la transmission hydraulique 20 en mode activé ou en mode désactivé.

Cette électrovalve 40 présente deux voies amont A, B, deux voies aval C et D, deux positions I, II, et un ressort de rappel qui tend à la maintenir dans sa position I.

La voie A est reliée au réservoir 52. La voie B est reliée au conduit de gavage 41. Les voies C et D sont reliées aux chambres de commande 34A et 34B de la valve 34.

En position I de l'électrovalve 40, ses voies A et C sont reliées entre elles et ses voies B et D sont reliées entre elles, de sorte que la chambre de commande 34B est alimentée par la conduite de gavage 41, tandis que la chambre de commande 34A est reliée au réservoir. Il en résulte que la valve 34 est placée dans sa position I représentée sur la figure 1, dans laquelle les conduites de moteur 30 et 32 sont isolées des conduites de pompe, de sorte que la transmission hydraulique n'est pas active. En position II de l'électrovalve 40, ses voies A et D sont reliées entre elles et les voies B et C sont reliées entre elles, de sorte que c'est cette fois la chambre 34A qui est alimentée et la chambre 34B qui est reliée au réservoir, ce qui place la valve 34 dans sa position II, ce qui relie les conduites de moteur aux conduites de pompe et active donc la transmission hydraulique.

On a indiqué précédemment que la pompe 24 est à cylindrée variable. Pour faire varier cette cylindrée, la transmission hydraulique comprend deux électrovalves progressives de commande, 36A et 36 qui peuvent être déplacées entre deux positions extrêmes, dans lesquelles elles relient au réservoir l'une des chambres de commande 22A, 22B du plateau-came de la pompe 24 et relient l'autre de ces chambres à la conduite de gavage 41.

La transmission hydraulique 20 est commandée par une unité de commande électronique 50, qui est reliée aux différentes électrovalves et aux différents capteurs de cette transmission 20 par des circuits seulement partiellement représentés.

L'unité de commande est reliée à une interface utilisateur 54, qui permet au conducteur du véhicule d'activer ou de désactiver la transmission hydraulique 20. Cette interface peut permettre divers modes de fonctionnement :
- transmission hydraulique activée pour permettre une assistance hydraulique du moteur d'entraînement en situation de conduite « normale » du véhicule (bouton ON),
- transmission hydraulique totalement désactivée pour que le véhicule ne soit entraîné que par la transmission mécanique (bouton OFF),
- transmission hydraulique partiellement activée, c'est-à-dire ne s'activant que lorsqu'un besoin d'assistance est détecté (Bouton APV).

Par exemple, par défaut, l'assistance hydraulique est mise en mode « activée » lorsque le conducteur met le contact au tableau de bord du véhicule, après une phase d'arrêt total. Ceci signifie que, lors du démarrage effectif du véhicule, la transmission hydraulique sera prête à fournir l'aide au démarrage. S'il ne souhaite pas une telle assistance, le conducteur peut cependant désactiver la transmission hydraulique via le bouton OFF. On peut d'ailleurs concevoir que cette désactivation ne soit valable que pour le démarrage en cours ou, au contraire, qu'elle devienne le mode adopté par défaut pour les démarrages suivants, auquel cas un actionnement du bouton ON peut activer l'assistance hydraulique pour le démarrage en cours, ou faire à nouveau que le mode « activée » soit le mode par défaut.

On peut également prévoir que l'assistance passe automatiquement en mode « activé » lorsque le véhicule circule à basse vitesse, alors que l'amplitude d'actionnement de la commande d'accélération est non nulle.

Le mode « partiellement activée » peut avoir plusieurs utilisations, par exemple pour permettre l'assistance hydraulique à basse vitesse, en particulier comme aide au passage des vitesses.

Via un curseur, un potentiomètre ou analogue tel que représenté sous le bouton APV, le conducteur peut avoir la possibilité de choisir l'intensité de l'assistance fournie par la transmission hydraulique, en particulier pour l'aide au démarrage.

L'unité de commande 50 est reliée à l'électrovalve 40 par une ligne de commande L40, afin de commander cette électrovalve dans sa position I, dans laquelle la transmission hydraulique est inactive, ou dans sa position II, dans laquelle la transmission hydraulique est active.

Par des lignes de commande L36A et L36B, l'unité de commande 50 commande également les électrovalves 36A et 36B pour commander la cylindrée de la pompe principale 24.

Par ailleurs, l'unité de commande reçoit des informations sur l'état de conduite du véhicule. En particulier, elle est apte à détecter une situation de basse vitesse, en particulier une situation de démarrage du véhicule, dans laquelle il est souhaitable que l'assistance hydraulique soit commandée en mettant en œuvre une phase d'assistance à basse vitesse.

Cette situation de basse vitesse peut être détectée par le fait que la vitesse du véhicule est faible, par exemple inférieure à 5km/h, alors qu'un faible rapport de vitesse (en particulier le premier) est enclenché et que la commande d'accélération est actionnée.

La situation de démarrage peut être détectée de la même façon et éventuellement en plus par le fait que la vitesse initiale du véhicule est nulle.

Plus précisément, l'aide au démarrage peut être déclenchée par un actionnement de la commande d'accélération du véhicule sur une amplitude déterminée (par exemple un pourcentage de sa course maximale, tel que 5% ou 10%), après un arrêt du véhicule, éventuellement combiné à un actionnement de la commande d'embrayage. Le choix de ne déclencher l'aide au démarrage que lors d'un actionnement de la commande d'accélération sur une amplitude déterminée permet d'éviter une aide au démarrage non souhaitée.

Par exemple, un capteur de position 55A est lié à la pédale d'accélération du véhicule, et transmet l'information qu'il acquiert à l'unité de commande 50. De même, un capteur de position 55B peut être prévu sur la pédale d'embrayage. La situation de débrayage peut également être détectée par un capteur (non représenté) relié à l'embrayage 18A.

L'unité de commande 50 contrôle l'activation et la désactivation de la transmission hydraulique 20 en commandant l'électrovalve 40 soit dans sa position II, ce qui place valve 34 dans sa position II et provoque l'activation de la transmission hydraulique, soit sans sa position I, qui place la valve 34 dans sa position I et provoque l'inactivation de la transmission hydraulique.

Lorsque la transmission hydraulique est activée, les moteurs 26A et 26B passent de leur configuration de roue libre à une configuration active, permettant ainsi à ces moteurs de délivrer un couple de sortie (mais, ainsi qu'on le verra, un mode de fonctionnement sans couple est également possible). Par exemple, la pression de fluide dans les conduites de moteur provoque la sortie des pistons de leurs cylindres, ou bien, éventuellement via une conduite d'activation non représentée, l'engagement des rotors des moteurs avec leurs organes de sortie.

Lorsque la transmission hydraulique est désactivée, par exemple pour faire cesser la phase d'assistance à basse vitesse, les moteurs hydrauliques passent dans leurs configurations de roue libre par un processus inverse.

Selon l'invention, une fois la situation d'aide au démarrage détectée ou lorsqu'un besoin d'assistance hydraulique se fait sentir à basse vitesse, on réalise une phase d'assistance à basse vitesse. Pour cela, on établit une consigne de pression pour la différence de pression entre l'alimentation et l'échappement des moteurs hydrauliques, on alimente ces moteurs par la pompe principale 24 et on ajuste le débit de cette pompe pour que, en étant entraînée par le moteur d'entraînement, elle maintienne entre les bornes des moteurs hydrauliques, une différence de pression sensiblement égale à cette consigne de pression. Par exemple, c'est en ajustant la cylindrée de la pompe principale qu'on ajuste son débit.

A cet effet, le dispositif comporte des capteurs de pression aptes à détecter la pression aux bornes des moteurs hydrauliques. Ces capteurs peuvent être disposés respectivement sur les conduites de moteur 30 et 32. Dans l'exemple représenté, on utilise deux capteurs de pression 27, respectivement disposés sur la conduite de pompe 28A et sur la conduite de moteur 32 ce qui revient au même puisque, lorsque la valve 34 est dans sa position active II, la conduite de pompe 28A est reliée à la conduite de moteur 30. Les capteurs 27 sont reliés à l'unité de commande 50, à laquelle ils fournissent les pressions P_{A} et P_{B} régnant respectivement aux bornes des moteurs hydrauliques.

On réalise un contrôle en pression, c'est-à-dire qu'on fait varier la cylindrée de la pompe principale pour obtenir une différence de pression donnée aux bornes des moteurs, asservie sur la consigne de pression. En d'autres termes, on recherche l'obtention d'un couple moteur donné par la consigne de pression.

La consigne de pression peut être une valeur fixe de la pression, pendant toute la durée de la phase d'assistance à basse vitesse, par exemple 150 bar. Cependant, il est intéressant de faire varier la consigne de pression pendant la phase d'assistance à basse vitesse, en particulier entre une valeur maximale CPmax au début de la phase d'assistance à basse vitesse et une valeur minimale CPmin à la fin de cette phase.

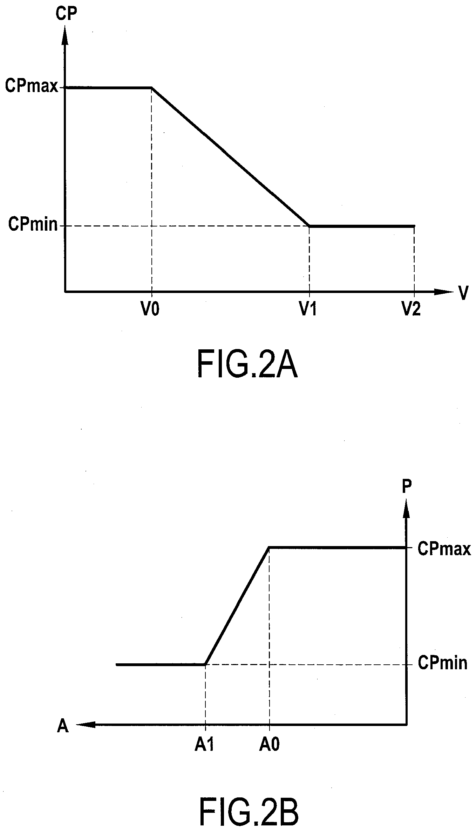

C'est ce que montrent les figures 2A et 2B.

La figure 2A donne un exemple de variation de la consigne de pression, dans lequel cette consigne CP dépend de la vitesse V du véhicule. A partir du début de la phase d'assistance à basse vitesse, la consigne de pression est fixée à une valeur CPmax et reste stable à cette valeur jusqu'à ce que la vitesse du véhicule ait atteint la vitesse V0, par exemple de l'ordre de 2 à 5 km/h. Ensuite, la vitesse continuant à augmenter, la consigne de pression décroît jusqu'à la valeur CPmin, atteinte à la vitesse V1, par exemple égale à 10 km/h. La phase d'assistance à basse vitesse peut cesser lorsque cette vitesse V1 est atteinte ou rester activée, alors que la consigne de pression reste à cette valeur CPmin, jusqu'à ce qu'une vitesse supérieure V2 (par exemple 15 km/h soit atteinte) ou bien pendant une durée restante prédéterminée (par exemple 20s) ou bien encore jusqu'à ce qu'une durée totale prédéterminée (par exemple 1mn) se soit écoulée depuis le début de la phase d'assistance à basse vitesse. Sur la figure 2A, la loi de décroissance de la consigne de pression CP entre les vitesses V0 et V1 est linéaire. Bien entendu, une décroissance non linéaire peut également être envisagée.

La figure 2B donne un autre exemple de variation de la consigne de pression, dans lequel cette consigne CP dépend de l'amplitude A d'actionnement de la commande d'accélération du véhicule, en particulier une pédale d'accélération. Dans cet exemple, la consigne CP reste égale à la valeur maximale CPmax tant que l'amplitude A reste supérieure à une amplitude A0 prédéterminée. Cette amplitude A0 est par exemple un pourcentage de la course totale de la commande d'accélération, par exemple de l'ordre de 20%. Le fait que l'amplitude A devienne inférieure à cette amplitude A0 témoigne d'un besoin d'accélération moindre ce qui, en principe, signifie que le véhicule a atteint une vitesse que le conducteur juge proche de la vitesse souhaitée pour le rapport de vitesse enclenché. L'assistance à basse vitesse peut cesser lorsque l'amplitude A devient inférieure à cette amplitude A0 ou bien continuer, par exemple tant que l'amplitude reste supérieure à une amplitude A1 déterminée, par exemple 10% de la course maximale. Dans ce dernier cas, il est intéressant que la consigne de pression CP diminue entre les amplitudes A0 et A1, par exemple linéairement. Une fois que l'amplitude A1 est atteinte, on peut faire cesser la phase d'assistance à basse vitesse, ou bien la continuer pendant une durée déterminée (par exemple 5 à 10s) à partir du moment où l'amplitude A1 a été atteinte.

Dans les exemples précités, l'obtention de la vitesse V0 ou la détection de l'amplitude A0 signifie qu'un régime intermédiaire est atteint et qu'on peut donc commencer à faire diminuer la consigne de pression.

D'autres lois de variation de la consigne de pression sont envisageables. On pourrait par exemple ne pas maintenir initialement la consigne à la valeur CPmax mais la faire diminuer continûment, ou bien accentuer progressivement la pente de sa diminution. On pourrait également choisir de faire dépendre la consigne de pression du temps, par exemple sur la base d'une courbe analogue à celle de la figure 2A, en remplaçant les vitesses V0, V1 et V2 par des durées.

Dans les exemples qui viennent d'être décrits, la consigne de pression est fixée à une valeur CPmax au début de la phase d'assistance à basse vitesse. Cette valeur CPmax est en particulier déterminée par la formule f x Pmax où Pmax est le plafond de la consigne de pression. Ce plafond est la valeur maximale de différence de pression entre les bornes des moteurs hydraulique, qui est acceptable par le dispositif, en particulier en fonction des spécificités des composants hydrauliques. Elle est par exemple de l'ordre de 250 bar. Le coefficient f est inférieur ou égal à 1, et dépend des caractéristiques de l'assistance à basse vitesse qui est demandée.

On a indiqué plus haut que, via un curseur, un potentiomètre ou analogue, le conducteur peut choisir l'intensité de l'assistance à basse vitesse. Ce curseur peut par exemple servir à déterminer la valeur du coefficient f.

On peut également choisir, comme caractéristique de l'assistance à basse vitesse, l'amplitude d'actionnement de la commande d'accélération au moment où la phase d'assistance à basse vitesse débute. Par exemple, f peut être égal à 1 lorsque cette amplitude est supérieure à un pourcentage déterminé de la course maximale de la commande d'accélération, ce pourcentage étant en particulier de 20% à 40%, plus particulièrement de 30%.

La valeur CPmin peut être de l'ordre de 80 bar. Il s'agit d'une pression suffisamment faible pour ne pas fournir de couple hydraulique significatif, tout en permettant une montée en pression rapide dans les conduites hydrauliques si le besoin s'en fait sentir, par exemple en cas de patinage des roues entraînées par la transmission mécanique.

Comme indiqué précédemment, on peut faire cesser la phase d'assistance à basse vitesse lorsqu'une vitesse jugée suffisante est atteinte. D'autres événements peuvent déclencher la fin de la phase d'assistance à basse vitesse, en particulier le fait que la durée de cette phase atteint une durée prédéterminée, ou celui que le couple de sortie requis pour la transmission mécanique diminue jusqu'à une valeur prédéterminée, ou encore le fait que l'embrayage est relâché depuis une durée prédéterminée après avoir été actionné, en particulier pour le démarrage. Cette durée de relâchement de l'embrayage peut être égale à 0, c'est-à-dire qu'on peut faire cesser l'assistance à basse vitesse, en particulier lorsqu'il s'agit d'un aide au démarrage, au moment où l'embrayage est relâché.

Pour faire cesser la phase d'assistance à basse vitesse, on peut inactiver les moteurs hydrauliques, par exemple en désengageant leurs pistons de leurs cames ou en plaçant le plateau-came de la pompe 24 en position neutre. On peut également faire cesser la phase d'assistance à basse vitesse en mettant la transmission hydraulique dans son état « partiellement activée » dans lequel les moteurs délivrent un couple nul.

En effet, on a indiqué précédemment que la transmission hydraulique peut être totalement désactivée, activée ou partiellement activée.

En général, la transmission hydraulique servant d'assistance à la transmission mécanique, elle est active en dessous d'un seuil limite d'application. Au-dessus de ce seuil, la transmission hydraulique peut passer automatiquement à l'état « désactivée » ou « partiellement activée », et l'interface utilisateur 54 peut en fonction de cela changer l'état des boutons ON, OFF et APV précités.

Comme indiqué dans la demande de brevet français non pré-publiée déposée sous le n° FR 1 353 043, la situation dans laquelle la transmission hydraulique est partiellement activée peut correspondre à une mise en mode de fonctionnement « sans couple » de cette dernière.

Pour rendre les moteurs 26A et 26B inactifs en mode « sans couple », on maintient la valve 34 en position II et, grâce à l'unité de commande 50, on régule la cylindrée de la pompe 24 en agissant sur les électrovalves 36A et 36B précitées de telle sorte que les pressions aux orifices d'alimentation 24A et d'échappement 24B de la pompe 24 soient sensiblement égales.

Pour permettre une telle régulation, on met à profit les deux capteurs de pression 27 précités, mesurant les pression P_{A} et P_{B} aux bornes des moteurs. Sur la base de ces valeurs de pression, l'unité de commande 50 fait varier et régule la valeur de la cylindrée de la pompe 24 de telle sorte que les pressions P_{A} et P_{B} deviennent égales. Cette régulation peut être faite par tout algorithme de contrôle adapté, en utilisant par exemple des PID ou autre.

Ainsi dans ce mode de régulation, le système utilise l'information de pression donnée par les capteurs de pression 27 pour déterminer la cylindrée de la pompe.

Par ailleurs, la plus basse de ces pressions (normalement P_{B} lorsque le véhicule se déplace en marche avant) est astreinte à être égale à la pression d'échange P_{E} par la valve d'échange 60.

Dans l'exemple précédent, l'invention a été illustrée par un mode de réalisation avec deux moteurs 26A et 26B placés en parallèle. L'invention peut naturellement être mise en œuvre avec tout nombre de moteurs, et quelle que soit leur configuration (en série, en parallèle, une combinaison de ces deux dispositions), dès lors que l'unité de commande détermine la vitesse de sortie du moteur d'entrainement 18 et pilote la cylindrée de la pompe principale 24 ainsi qu'il a été décrit.

Comme on l'a vu, le dispositif de la figure 1, qui utilise des capteurs de pression 27, permet de réaliser un contrôle par la pression.

Dans l'exemple représenté, ce dispositif comprend également des capteurs de vitesse 29 mesurant la vitesse de sortie des moteurs hydrauliques ou celle des roues qu'ils entrainent.

Selon le mode de commande que l'on souhaite mettre en œuvre, on peut faire coexister les capteurs 27 et 29, ou bien n'utiliser qu'une seule de ces catégories de capteurs. Par exemple, comme indiqué dans la demande de brevet français n° FR 1 353 043, on peut, alors que la transmission hydraulique est en activation partielle, faire en sorte que cette transmission ne produise pas de couple. Ceci est utile en dehors des situations d'embrayage ou d'assistance à basse vitesse, ou dans toute situation dans laquelle l'assistance n'est pas requise.

Dans ce cas, l'unité de commande 50 peut déterminer la cylindrée de la pompe pour que le couple de sortie des moteurs hydrauliques soit sensiblement nul, sur la base des informations de vitesse de rotation des roues ou des moteurs hydrauliques fournies par les capteurs 29, et des informations de vitesse de rotation du rotor de la pompe 24 fournies par le capteur 31. La cylindrée de la pompe est pour cela calculée de telle sorte que la vitesse de rotation des arbres de sortie des moteurs hydrauliques 26A, 26B, calculée à partir de la vitesse de rotation du rotor de la pompe 24 et des cylindrées respectives de la pompe et des moteurs, soit égale à la vitesse de rotation effective des arbres de sortie des moteurs 26A, 26B (c'est-à-dire la vitesse de rotation des roues 14A, 14B) telle que mesurée par les capteurs 29.

La vitesse de rotation de l'arbre de la pompe 24 conjointement avec la cylindrée de celle-ci, détermine en effet le débit de fluide refoulé par la pompe 24 vers les moteurs 26A,26B. De ce débit se déduit la vitesse de rotation des arbres de sortie des moteurs, compte tenu de la cylindrée de ceux-ci.

En choisissant une cylindrée de pompe qui rend la vitesse de rotation des arbres de sortie des moteurs 26A,26B égale à la vitesse de rotation des roues 14A, 14B, l'unité de commande 50 pilote la pompe 24 de telle sorte que les pressions de fluide aux orifices d'alimentation et d'échappement des moteurs 26A, 26B demeurent sensiblement égales, et que les moteurs 26A et 26B ne délivrent aucun couple sur leur arbre de sortie.

Bien entendu, la liaison entre l'unité de commande 50 et les différents organes qu'elle commande en leur transmettant une information ou dont elle reçoit une information, peut être réalisée par tout moyen approprié pour transporter de l'information, filaire ou autre.

## Revendications

1. Procédé de commande d'un dispositif de transmission d'un véhicule, le dispositif comprenant un moteur d'entraînement (18), une transmission mécanique (16) reliée au moteur d'entraînement et une transmission hydraulique (20) ayant une pompe (24) et n moteurs hydrauliques (26A, 26B), n étant supérieur ou égal à 1, la pompe étant apte à être entrainée par le moteur d'entrainement pour alimenter les moteurs hydrauliques en fluide,
**caractérisé en ce qu'**on réalise une phase d'assistance dite « à basse vitesse » pendant laquelle, alors que le véhicule est entraîné par la transmission mécanique, on établit une consigne de pression (CP) pour la différence de pression entre l'alimentation et l'échappement des moteurs hydrauliques, on alimente les moteurs hydrauliques par la pompe, on détecte la différence de pression entre l'alimentation et l'échappement (28A, 28B) des moteurs hydrauliques (26A, 26B), et on ajuste le débit de la pompe pour que ladite différence de pression soit sensiblement égale à ladite consigne de pression.

2. Procédé selon la revendication 1, **caractérisé en ce qu'**on détecte une situation de démarrage de l'entrainement du véhicule par la transmission mécanique et on réalise la phase d'assistance à basse vitesse en tant qu'aide au démarrage.

3. Procédé selon la revendication 2, **caractérisé en ce que** lorsqu'on détecte la situation de démarrage, l'aide au démarrage est reste inactivée tant que l'amplitude d'actionnement de la commande d'accélération (55A) du véhicule n'a pas atteint une amplitude cible.

4. Procédé selon l'une quelconque des revendications 1 à 3, **caractérisé en ce qu'**on cesse la phase d'assistance à basse vitesse quand au moins l'un des événements suivants se produit :
- un paramètre représentatif de la vitesse du véhicule atteint une valeur prédéterminée,
- la durée de la phase d'assistance à basse vitesse atteint une durée prédéterminée,
- le couple de sortie requis pour la transmission mécanique diminue jusqu'à une valeur prédéterminée,
- un embrayage reliant la transmission mécanique au moteur d'entraînement est relâché depuis une durée prédéterminée, qui peut être égale à 0, après avoir été actionné.

5. Procédé selon l'une quelconque des revendications 1 à 4, **caractérisé en ce qu'**on fait varier la valeur de la consigne de pression (CP) pendant la phase d'assistance à basse vitesse.

6. Procédé selon la revendication 5, **caractérisé en ce que**, pendant la phase d'assistance à basse vitesse, on fait diminuer la valeur de la consigne de pression (CP) entre une valeur maximale CPmax et une valeur minimale CPmin, ladite valeur minimale CPmin étant atteinte à la fin de la phase d'assistance à basse vitesse.

7. Procédé selon la revendication 6, **caractérisé en ce qu'**on définit un plafond de consigne de pression Pmax et on détermine la valeur maximale de la consigne de pression CPmax, selon la relation CPmax = f x Pmax, le coefficient f étant inférieur ou égal à 1 et étant fonction de caractéristiques de l'assistance à basse vitesse demandées, telles que l'amplitude d'actionnement de la commande d'accélération du véhicule.

8. Procédé selon la revendication 7, **caractérisé en ce que** le coefficient f est égal à 1 lorsque l'amplitude d'actionnement de la commande d'accélération (55A) est au moins égale à un pourcentage prédéterminé de la course totale de ladite commande, ledit pourcentage prédéterminé étant en particulier compris entre 20% et 40%, plus particulièrement 30%.

9. Procédé selon l'une quelconque des revendications 6 à 8, **caractérisé en ce qu'**on maintient la valeur de la consigne de pression (CP) à la valeur maximale CPmax depuis le début de la phase d'assistance à basse vitesse, jusqu'au moment où l'entrainement du véhicule atteint un régime intermédiaire déterminé, puis on fait diminuer la valeur de la consigne de pression jusqu'à la valeur minimale CPmin atteinte à la fin de la phase d'assistance à basse vitesse.

10. Procédé selon la revendication 9, **caractérisé en ce qu'**on fait diminuer la valeur de la consigne de pression (CP) selon une loi de variation déterminée, en particulier une loi de variation linéaire.

11. Procédé selon la revendication 9 ou 10, **caractérisé en ce que** le régime intermédiaire est atteint lorsqu'un paramètre représentatif de la vitesse du véhicule atteint une valeur intermédiaire déterminée.

12. Procédé selon l'une quelconque des revendications 1 à 11, **caractérisé en ce qu'**on permet ou non l'activation de l'assistance à basse vitesse.

13. Procédé selon l'une quelconque des revendications 1 à 12, **caractérisé en ce que**, pendant la phase d'assistance à basse vitesse, on ajuste le débit de la pompe (24) en faisant varier la cylindrée de ladite pompe.

14. Procédé selon l'une quelconque des revendications 1 à 13, **caractérisé en ce qu'**on on commute entre une phase d'assistance à basse vitesse et une phase d'assistance hydraulique dans laquelle le débit de la pompe (24) est déterminé en fonction de la vitesse de sortie de la transmission mécanique.

15. Véhicule comprenant un dispositif de transmission qui comprend un moteur d'entrainement (18), une transmission mécanique (16) reliée au moteur d'entrainement et une transmission hydraulique (20) ayant une pompe (24) et n moteurs hydrauliques (26A, 26B), n étant supérieur ou égal à 1, la pompe étant apte à être entraînée par le moteur d'entrainement pour alimenter les moteurs hydrauliques en fluide, **caractérisé en ce que** le dispositif de transmission est configuré pour réaliser une phase d'assistance dite « à basse vitesse » pendant laquelle, alors que le véhicule est entraîné par la transmission mécanique, une consigne de pression (CP) pour la différence de pression entre l'alimentation et l'échappement des moteurs hydrauliques est établie, les moteurs hydrauliques sont alimentés par la pompe, la différence de pression entre l'alimentation et l'échappement (28A, 28B) des moteurs hydrauliques (26A, 26B) est détectée, et le débit de la pompe est ajusté pour que ladite différence de pression soit sensiblement égale à ladite consigne de pression.

## Patentansprüche

1. Verfahren zur Steuerung einer Getriebevorrichtung eines Fahrzeugs, wobei die Vorrichtung einen Antriebsmotor (18), ein mechanisches Getriebe (16), das mit dem Antriebsmotor verbunden ist, und ein hydraulisches Getriebe (20) umfasst, das eine Pumpe (24) und n Hydraulikmotoren (26A, 26B) aufweist, wobei n größer oder gleich 1 ist, wobei die Pumpe dazu geeignet ist, von dem Antriebsmotor angetrieben zu werden, um die Hydraulikmotoren mit Fluid zu versorgen,
**dadurch gekennzeichnet, dass** eine Unterstützungsphase verwirklicht wird, die als "mit niedriger Geschwindigkeit" bezeichnet wird, während welcher, wenn das Fahrzeug durch das mechanische Getriebe angetrieben wird, ein Solldruck (CP) für die Druckdifferenz zwischen dem Zulauf und dem Ablauf der Hydraulikmotoren festgelegt wird, die Hydraulikmotoren durch die Pumpe versorgt werden, die Druckdifferenz zwischen dem Zulauf und dem Ablauf (28A, 28B) der Hydraulikmotoren (26A, 26B) erfasst wird, und der Durchsatz der Pumpe so eingestellt wird, dass die Druckdifferenz im Wesentlichen gleich dem Solldruck ist.

2. Verfahren nach Anspruch 1, **dadurch gekennzeichnet, dass** eine Situation des Starts des Antriebs des Fahrzeugs durch das mechanische Getriebe erfasst wird und die Unterstützungsphase mit niedriger Geschwindigkeit als Starthilfe verwirklicht wird.

3. Verfahren nach Anspruch 2, **dadurch gekennzeichnet, dass**, wenn die Startsituation erfasst wird, die Starthilfe inaktiv gehalten wird, solange die Betätigungsamplitude der Beschleunigungssteuerung (55A) des Fahrzeugs eine Zielamplitude nicht erreicht.

4. Verfahren nach einem der Ansprüche 1 bis 3, **dadurch gekennzeichnet, dass** die Unterstützungsphase mit niedriger Geschwindigkeit ausgesetzt wird, wenn zumindest eines der folgenden Ereignisse eintritt:
- ein Parameter, der die Geschwindigkeit des Fahrzeugs darstellt, erreicht einen vorbestimmten Wert,
- die Dauer der Unterstützungsphase mit niedriger Geschwindigkeit erreicht eine vorbestimmte Dauer,
- das Ausgangsdrehmoment, das für das mechanische Getriebe erforderlich ist, nimmt bis auf einen vorbestimmten Wert ab,
- eine Kupplung, die das mechanische Getriebe mit dem Antriebsmotor verbindet, wird, nachdem sie betätigt wurde, für eine vorbestimmte Dauer, die gleich 0 sein kann, gelöst.

5. Verfahren nach einem der Ansprüche 1 bis 4, **dadurch gekennzeichnet, dass** man den Wert des Solldrucks (CP) während der Unterstützungsphase mit niedriger Geschwindigkeit variieren lässt.

6. Verfahren nach Anspruch 5, **dadurch gekennzeichnet, dass** man während der Unterstützungsphase mit niedriger Geschwindigkeit den Wert des Solldrucks (CP) zwischen einem maximalen Wert CPmax und einem minimalen Wert CPmin abnehmen lässt, wobei der minimale Wert CPmin am Ende der Unterstützungsphase mit niedriger Geschwindigkeit erreicht wird.

7. Verfahren nach Anspruch 6, **dadurch gekennzeichnet, dass** ein oberer Grenzwert des Solldrucks Pmax definiert wird und der maximale Wert des Solldrucks CPmax bestimmt wird, gemäß der Beziehung CPmax = f x Pmax, wobei der Koeffizient f kleiner oder gleich 1 ist und abhängig von den geforderten Eigenschaften der Unterstützung mit niedriger Geschwindigkeit ist, wie etwa der Betätigungsamplitude der Beschleunigungssteuerung des Fahrzeugs.

8. Verfahren nach Anspruch 7, **dadurch gekennzeichnet, dass** der Koeffizient f gleich 1 ist, wenn die Betätigungsamplitude der Beschleunigungssteuerung (55A) zumindest gleich einem vorbestimmten Prozentsatz des gesamten Umfangs der Steuerung ist, wobei der vorbestimmte Prozentsatz insbesondere zwischen 20 % und 40 %, noch spezieller 30 % ist.

9. Verfahren nach einem der Ansprüche 6 bis 8, **dadurch gekennzeichnet, dass** man den Wert des Solldrucks (CP) von dem Beginn der Unterstützungsphase mit niedriger Geschwindigkeit bis zu dem Moment, an dem der Antrieb des Fahrzeugs ein bestimmtes Zwischenregime erreicht, auf dem maximalen Wert CPmax hält, und man dann den Wert des Solldrucks bis auf den minimalen Wert CPmin, der an dem Ende der Unterstützungsphase mit niedriger Geschwindigkeit erreicht wird, abnehmen lässt.

10. Verfahren nach Anspruch 9, **dadurch gekennzeichnet, dass** man den Wert des Solldrucks (CP) gemäß einem bestimmten Variationsgesetz, insbesondere einem linearen Variationsgesetz, abnehmen lässt.

11. Verfahren nach Anspruch 9 oder 10, **dadurch gekennzeichnet, dass** das Zwischenregime erreicht wird, wenn ein Parameter, der die Geschwindigkeit des Fahrzeugs darstellt, einen bestimmten Zwischenwert erreicht.

12. Verfahren nach einem der Ansprüche 1 bis 11, **dadurch gekennzeichnet, dass** die Aktivierung der Unterstützung mit niedriger Geschwindigkeit erlaubt wird oder nicht.

13. Verfahren nach einem der Ansprüche 1 bis 12, **dadurch gekennzeichnet, dass** man während der Unterstützungsphase mit niedriger Geschwindigkeit den Durchsatz der Pumpe (24) einstellt, indem man die Verdrängung der Pumpe variieren lässt.

14. Verfahren nach einem der Ansprüche 1 bis 13, **dadurch gekennzeichnet, dass** man zwischen einer Unterstützungsphase mit niedriger Geschwindigkeit und einer hydraulischen Unterstützungsphase umschaltet, in welcher der Durchsatz der Pumpe (24) in Abhängigkeit von der Ausgangsdrehzahl des mechanischen Getriebes bestimmt wird.

15. Fahrzeug, das eine Getriebevorrichtung umfasst, die einen Antriebsmotor (18), ein mechanisches Getriebe (16), das mit dem Antriebsmotor verbunden ist, und ein hydraulisches Getriebe (20), das eine Pumpe (24) und n Hydraulikmotoren (26A, 26B) aufweist, umfasst, wobei n größer oder gleich 1 ist, wobei die Pumpe dazu geeignet ist, von dem Antriebsmotor angetrieben zu werden, um die Hydraulikmotoren mit Fluid zu versorgen,
**dadurch gekennzeichnet, dass**
die Getriebevorrichtung dazu ausgestaltet ist, eine Unterstützungsphase zu verwirklichen, die als "mit niedriger Geschwindigkeit" bezeichnet wird, während welcher, wenn das Fahrzeug durch das mechanische Getriebe angetrieben wird, ein Solldruck (CP) für die Druckdifferenz zwischen dem Zulauf und dem Ablauf der Hydraulikmotoren festgelegt wird, die Hydraulikmotoren durch die Pumpe versorgt werden, die Druckdifferenz zwischen dem Zulauf und dem Ablauf (28A, 28B) der Hydraulikmotoren (26A, 26B) erfasst wird, und der Durchsatz der Pumpe so eingestellt wird, dass die Druckdifferenz im Wesentlichen gleich dem Solldruck ist.

## Claims

1. A method of controlling a transmission apparatus of a vehicle, the apparatus comprising a drive engine (18), a mechanical transmission (16) connected to the drive engine, and a hydraulic transmission (20) having a pump (24) and n hydraulic motors (26A, 26B), where n is greater than or equal to 1, the pump being suitable for being driven by the drive engine for feeding fluid to the hydraulic motors;
said method being **characterized in that** it comprises performing a "low-speed" assistance stage, during which, while the vehicle is driven by the mechanical transmission, a setpoint pressure (CP) for the pressure difference between the feed and the discharge of each of the hydraulic motors is established, the hydraulic motors are fed by the pump, the pressure difference between the feed and the discharge (28A, 28B) of each of the hydraulic motors (26A, 26B) is detected, and the delivery rate of the pump is adjusted so that said pressure difference is substantially equal to said setpoint pressure.

2. A method according to claim 1, **characterized in that** a starting situation in which the vehicle starts being driven by the mechanical transmission is detected, and the low-speed assistance stage is performed as assistance with the starting.

3. A method according to claim 2, **characterized in that** when the starting situation is detected, the assistance with starting remains inactivated so long as the amplitude of actuation of the acceleration control (55A) of the vehicle has not reached a target amplitude.

4. A method according to any one of claims 1 to 3, **characterized in that** the low-speed assistance stage is caused to cease when at least one of the following events occurs:
• a parameter representative of the speed of the vehicle reaches a predetermined value;
• the duration of the low-speed assistance stage reaches a predetermined duration;
• the outlet torque needed from the mechanical transmission decreases to a predetermined value; and
• a clutch connecting the mechanical transmission to the drive engine is released for a predetermined duration, which may be equal to 0, after it has been actuated.

5. A method according to any one of claims 1 to 4, **characterized in that** the value of the setpoint pressure (CP) is caused to vary during the low-speed assistance stage.

6. A method according to claim 5, **characterized in that**, during the low-speed assistance stage, the value of the setpoint pressure (CP) is caused to decrease from a maximum value CPmax to a minimum value CPmin, said minimum value CPmin being reached at the end of the low-speed assistance stage.

7. A method according to claim 6, **characterized in that** a setpoint pressure ceiling Pmax is defined and the maximum value for the setpoint pressure CPmax is determined, using the relationship CPmax = f × Pmax, the coefficient f being less than or equal to 1, and being a function of requested characteristics for the low-speed assistance, such as the amplitude of actuation of the acceleration control of the vehicle.

8. A method according to claim 7, **characterized in that** the coefficient f is equal to 1 when the amplitude of actuation of the acceleration control (55A) is at least equal to a predetermined percentage of the total stroke of said control, said predetermined percentage being, in particular, in the range 20% to 40%, and more particularly 30%.

9. A method according to any one of claims 6 to 8, **characterized in that** the value of the setpoint pressure (CP) is maintained at the maximum value CPmax from the beginning of the low-speed assistance stage to the moment at which the drive of the vehicle reaches a determined intermediate state, and then the value of the setpoint pressure is caused to decrease to the minimum value CPmin reached at the end of the low-speed assistance stage.

10. A method according to claim 9, **characterized in that** the value of the setpoint pressure (CP) is caused to decrease using a determined variation relationship, in particular a linear variation relationship.

11. A method according to claim 9 or 10, **characterized in that** the intermediate state is reached when a parameter representative of the speed of the vehicle reaches a determined intermediate value.

12. A method according to any one of claims 1 to 11, **characterized in that** activation of the low-speed assistance is enabled or is disabled.

13. A method according to any one of claims 1 to 12, **characterized in that**, during the low-speed assistance stage, the delivery rate of the pump (24) is adjusted by causing the cylinder capacity of said pump to vary.

14. A method according to any one of claims 1 to 13, **characterized in that** switching-over is performed between a low-speed assistance stage and a hydraulic assistance stage in which the delivery rate of the pump (24) is determined as a function of the outlet speed of the mechanical transmission.

15. A vehicle including a transmission apparatus comprising a drive engine (18), a mechanical transmission (16) connected to the drive engine, and a hydraulic transmission (20) having a pump (24) and n hydraulic motors (26A, 26B), where n is greater than or equal to 1, the pump being suitable for being driven by the drive engine for feeding fluid to the hydraulic motors;
said vehicle being **characterized in that** the transmission apparatus is configured to perform a "low-speed" assistance stage, during which, while the vehicle is driven by the mechanical transmission, a setpoint pressure (CP) for the pressure difference between the feed and the discharge of each of the hydraulic motors is established, the hydraulic motors are fed by the pump, the pressure difference between the feed and the discharge (28A, 28B) of each of the hydraulic motors (26A, 26B) is detected, and the delivery rate of the pump is adjusted so that said pressure difference is substantially equal to said setpoint pressure.
